# EUROPEAN PATENT SPECIFICATION

(11) **EP 4 513 604 B1**
(45) Date of publication and mention of the grant of the patent: **28.10.2026**
(21) Application number: 23791995.6
(22) Date of filing: 14.02.2023
(51) Int. Cl.: H01M 10/04, G01N 21/88, H01M 10/0585, B32B 41/00, B32B 37/00, G01N 21/95

(54) **LAMINATION APPARATUS AND UNIT CELL MANUFACTURING METHOD**
LAMINIERUNGSVORRICHTUNG UND EINHEITSZELLENHERSTELLUNGSVERFAHREN
APPAREIL DE STRATIFICATION ET PROCÉDÉ DE FABRICATION DE CELLULE UNITAIRE

(30) Priority: 21.04.2022 KR 20220049366
(43) Date of publication of application: 26.02.2025
(73) Proprietor: LG Energy Solution, Ltd., Seoul 07335 (KR)
(72) Inventor: CHO, Kwooman, Daejeon 34122 (KR)
(74) Representative: Goddar, Heinz J.
(86) International application number: PCT/KR2023/002168
(87) International publication number: WO 2023/204412

(56) References cited:
- WO-A1-2020/203114
- WO-A1-2021/194284
- KR-A- 20120 095 160
- KR-A- 20160 051 347
- KR-A- 20180 119 946
- KR-A- 20200 066 901
- KR-A- 20210 058 170
- KR-A- 20210 119 872
- KR-A- 20210 147 658

## Description

### [Technical Field]

This application claims the benefit of priority to Korean Patent Application No. 10-2022-0049366, filed on April 21, 2022 in the Korean Intellectual Property Office.

The present invention relates to a lamination device and a unit cell manufacturing method, and more particularly, to a lamination device and a unit cell manufacturing method capable of preventing damage to a separator and reducing a defect rate of a unit cell.

### [Background Art]

In general, a secondary battery includes a positive electrode, a negative electrode, and an electrolyte, and generates electric energy by using a chemical reaction. The use of secondary batteries is gradually increasing due to the advantage of being able to charge and discharge. Among these secondary batteries, lithium secondary batteries have a high energy density per unit weight, and thus are widely used as power sources for electronic communication devices, driving sources for high-power hybrid vehicles and electric vehicles, or the like.

In terms of the shape of the secondary batteries, there is a growing demand for prismatic-type secondary batteries and pouch-type secondary batteries that can be applied to products such as mobile phones and the like due to their small thickness. In terms of the material of the secondary batteries, there is a growing demand for lithium secondary batteries, such as lithium-ion batteries and lithium-ion polymer batteries, which have high energy density, discharge voltage, and output stability.

An electrode sheet is supplied to a notching module, and the notching module forms electrode tabs with equal spacing on one side of the electrode sheet in a width direction. The electrode sheet on which the electrode tabs are formed is rewound on a rewinder.

Korean Patent Publication No. 2328527 discloses a lamination device. In the lamination device, electrode sheets wound on two electrode rolls and separator sheets wound on two separator rolls are supplied. At this time, a first cutter unit cuts a first electrode sheet to form a first electrode, which is then laminated between a pair of separator sheets, and a second cutter unit cuts a second electrode sheet to form a second electrode, which is then laminated on an upper separator sheet. In this case, the second electrode is laminated on the upper separator sheet in a one-to-one correspondence with the first electrode. Further, the patent publication WO2020/203114A1 discloses a lamination device with similarities to the present invention. Moreover, patent publication KR20200066901A discloses a lamination device with similarities to the present invention

An electrode laminate in which the cut first electrode and second electrode are laminated respectively on the separator sheets is supplied to a heater unit and a lamination roller of a laminator. The heater unit heats the electrode laminate, and the lamination roller presses and combines the electrode laminate. Subsequently, a third cutter unit installed on a downstream side of the lamination roller cuts a portion of the separator sheet between a pair of adjacent electrodes to form a mono-cell. A vision device is installed on a downstream side of the laminator in order to check the mono-cell. The vision device checks for a change in position of the electrode bonded to the separator or for a distortion of the electrode.

However, in the above-described lamination device, the lamination roller always presses the electrode laminate with the same pressure, and each of the electrodes on the uppermost layer of the electrode laminate is laminated to be stepped with the separator sheet. Accordingly, an impact is applied to an edge portion of the electrode whenever the edge portion of the electrode comes into contact with the lamination roller. Moreover, the impact applied to the edge portion of the electrode may be further increased as a transfer speed of the electrode laminate increases in order to increase the productivity of the secondary battery. A portion of the separator sheet corresponding to the edge portion of the electrode or its vicinity may be damaged by excessive impact. Accordingly, a defect rate of the mono-cell may be increased.

In addition, when a thickness of the electrode in the electrode laminate is increased, the step difference between the electrode and the separator sheet is increased, and thus the amount of impact between the lamination roller and the electrode may be further increased. In addition, even when the thickness of the separator sheet in the electrode laminate is reduced, the possibility of damage to the separator sheet may be further increased even when the same impact force is applied to the electrode. Even in this case, the defect rate of the mono-cell may be increased.

In addition, the thickness of the electrodes laminated on the electrode laminate may vary due to a processing error of a current collector, a coating error of an active material, a lamination error of the electrode and the separator sheet, and the like. However, in the conventional lamination device, the lamination roller presses the electrode laminate at a constant pressure, which may increase the possibility of damage to the separator sheet when electrodes of different thicknesses are pressed by the lamination roller.

In addition, since the vision device simply checks whether the mono-cell is defective, it is difficult to determine whether the separator sheet is damaged while the electrode laminate is being laminated. Further, since the lamination device investigates the cause of the defect after the damage of the separator sheet has progressed for a certain period of time, the defect rate of the mono-cell is inevitably increased.

### [Disclosure]

### [Technical Problem]

The present invention is designed to solve the above-mentioned problems, and is directed to providing a lamination device and a unit cell manufacturing method, capable of preventing damage to a separator and lowering a defect rate of a unit cell.

The present invention is also directed to providing a lamination device and a unit cell manufacturing method, capable of correcting a pressure of a lamination roller unit in real time according to a brightness value of an image captured by a vision unit.

The present invention is also directed to providing a lamination device and a unit cell manufacturing method, capable of preventing a separator sheet from being damaged or excessively pressed in real time while an electrode laminate is being laminated.

The present invention is also directed to providing a lamination device and a unit cell manufacturing method, capable of significantly mitigating an impact between a lamination roller unit and electrodes having different thicknesses in an electrode laminate.

The present invention is also directed to providing a lamination device and a unit cell manufacturing method, capable of significantly reducing the possibility of damage to a separator by mitigating an impact applied to the separator even when a thickness of the separator in a unit cell is reduced.

### [Technical Solution]

According to an aspect of the present invention, there is provided a lamination device including a vision unit disposed at a downstream side of a final cutter unit and configured to capture an image of a unit cell, and a control unit configured to calculate a brightness value of the captured image received from the vision unit and control a pressure adjusting unit to correct the pressure of a lamination roller unit according to the calculated brightness value.

The vision unit may be disposed on a lower side of the unit cell to capture the image of the unit cell.

The control unit may calculate a calculated brightness value corresponding to a portion of the separator in contact with an edge portion of the electrode in the calculated image.

An allowable brightness range for the calculated brightness value may be preset in the control unit.

The control unit may control the pressure adjusting unit to correct the pressure of the lamination roller unit when it is determined that the calculated brightness value is outside the allowable brightness range.

The vision unit may capture the image of the unit cell in real time, and the control unit may correct the pressure of the lamination roller unit in real time.

The control unit may correct the pressure of the lamination roller unit based on the largest pressure among pressures at which the lamination roller unit presses the electrode laminate.

The control unit may include a vision control unit configured to receive the image captured by the vision unit, and an automatic control unit configured to calculate the calculated brightness value by calculating the image received from the vision control unit, and control the pressure adjusting unit to correct the pressure of the lamination roller unit when it is determined that the calculated brightness value is outside a preset allowable brightness range.

An initial pressure value of the pressure adjusting unit may be preset in the control unit.

The lamination roller unit may include an upper lamination roller and a lower lamination roller.

The lower lamination roller may be fixed to a lower side of the separator sheet, and the pressure adjusting unit may be connected to the upper lamination roller to lift and lower the upper lamination roller.

The lamination device may further include an alarm unit configured to generate a warning sound when it is determined that the calculated brightness value is outside an allowable brightness range even after the pressure of the lamination roller unit is corrected.

A unit cell manufacturing method according to the present invention includes a lamination operation, a cutting operation, and a pressure correction operation.

In the lamination operation, a lamination roller unit presses an electrode laminate to laminate a separator sheet and an electrode.

In the cutting operation, a final cutter unit cuts the electrode laminate to form a unit cell.

In an image capturing operation, a vision unit captures an image of the unit cell.

In a pressure adjusting operation, a control unit calculates a brightness value by calculating the captured image received from the vision unit, and controls a pressure adjusting unit to correct the pressure of the lamination roller unit according to the calculated brightness value.

The vision unit may capture the image of the unit cell from a lower side of the unit cell.

The control unit may calculate a calculated brightness value corresponding to a portion of the separator in contact with an edge portion of the electrode of the unit cell in the calculated image.

An allowable brightness range for the calculated brightness value may be preset in the control unit.

The control unit may control the pressure adjusting unit to correct the pressure of the lamination roller unit when it is determined that the calculated brightness value is outside the allowable brightness range.

The vision unit may capture the image of the unit cell in real time, and the control unit may correct the pressure of the lamination roller unit in real time.

The control unit may correct the pressure of the lamination roller unit based on the largest pressure among pressures at which the lamination roller unit presses the electrode laminate.

An initial pressure value of the pressure adjusting unit may be preset in the control unit.

The pressure adjusting unit may correct the pressure by lifting and lowering an upper lamination roller of the lamination roller unit.

The unit cell manufacturing method may further include generating a warning sound by an alarm unit when it is determined that the calculated brightness value is outside an allowable brightness range even after the pressure of the lamination roller unit is corrected.

### [Advantageous Effects]

According to the present invention, a pressure of a lamination roller unit can be corrected in real time according to a brightness value of an image captured by a vision unit, thereby preventing a separator sheet from being damaged or excessively pressed in real time while an electrode laminate is being laminated. Accordingly, a defect rate of a unit cell can be significantly reduced.

According to the present invention, since the pressure of the lamination roller unit is corrected in real time according to the brightness value of the captured image of the unit cell, an impact between the lamination roller unit and electrodes having different thicknesses can be significantly mitigated in the electrode laminate. Accordingly, damage to the separator sheet can be minimized, and the defect rate of the unit cell can be reduced.

According to the present invention, since the pressure of the lamination roller unit is corrected in real time according to the brightness value of the image captured by the vision unit, even when a thickness of the separator is reduced in the unit cell, the possibility of damage to the separator can be significantly reduced by mitigating the impact applied to the separator.

According to the present invention, the thickness of the electrode can be increased by as much as the separator is thinned in the unit cell of the same thickness. Furthermore, the capacity of a battery can be significantly increased in a battery package in which the unit cell is stacked.

According to the present invention, an alarm unit can generate a warning signal when it is determined that a calculated brightness value is outside an allowable brightness range for more than a certain number of times (for a certain period of time) even after automatically correcting the pressure of the lamination roller unit.

In addition to the above-described effects, specific effects of the present invention are described together while describing detailed matters for carrying out the invention.

### [Description of Drawings]

FIG. 1 is a view schematically illustrating a lamination device according to the present invention.
FIG. 2 is a view schematically illustrating a vision unit and a control unit in the lamination device according to the present invention.
FIG. 3 is a view schematically illustrating a state in which an electrode laminate is pressed by a lamination roller unit in the lamination device according to the present invention.
FIG. 4 is a view schematically illustrating a state in which a thickness of a separator sheet of a unit cell cut from the electrode laminate according to the present invention is formed to be less than that of the conventional separator.
FIG. 5 is a view schematically illustrating a state in which the vision unit according to the present invention captures an image of the unit cell.
FIG. 6 is a block diagram schematically illustrating an automatic control unit constituting the control unit according to the present invention.
FIG. 7 is a view schematically illustrating the image of the unit cell captured by the vision unit according to the present invention.
FIG. 8 is a cross-sectional view schematically illustrating a state in which a damaged portion is generated in a second separator in the unit cell of FIG. 7.
FIG. 9 is a view schematically illustrating a state in which a pressed mark is formed at an edge portion of the separator in the captured image of the unit cell according to the present invention.
FIG. 10 is a flowchart schematically illustrating a method of manufacturing a unit cell according to the present invention.

10: unit cell, 11: first electrode
12: second electrode, 13: separator
13a: first separator, 13b: second separator
E: edge portion, 100: lamination device
102: electrode laminate, 110: first electrode roll
111: first electrode sheet, 120: second electrode roll
121: second electrode sheet, 130: separator roll
130a: first separator roll, 130b: second separator roll
131: separator sheet, 131a: first separator sheet
131b: second separator sheet, 133: pinch roller
141: first cutter unit, 143: second cutter unit
150: lamination unit, 151: heater unit
153: lamination roller unit, 153a: upper lamination roller unit
153b: lower lamination roller, 155: pressure adjusting unit
160: final cutter unit, 170: vision unit
180: control unit, 181: vision control unit
183: automatic control unit, 184: input control unit
185: data memory unit, 186: calculating and processing unit
187: program memory unit, 188: output control unit
190: alarm unit

### [Modes of the Invention]

Hereinafter, exemplary embodiments of the present invention will be described with reference to the accompanying drawings in detail.

The present invention is not limited to the embodiments disclosed below and susceptible to various modifications, and can be implemented in various different forms. The present embodiments are provided only to complete the disclosure of the present invention and assist those skilled in the art to completely understand the scope of the present invention.

The accompanying drawings are merely intended to facilitate understanding of embodiments disclosed in this specification, and the technical spirit disclosed herein is not limited by the accompanying drawings, and it should be understood that all modifications, equivalents, and substitutes fall within the spirit and technical scope of the present invention. In the drawings, sizes or thicknesses of components may be exaggerated in consideration of the ease of understanding or the like, but the protection scope of the present invention should not be construed as being limited thereto.

The terms used herein are only used to describe a particular implementation or embodiment, and are not intended to limit the present invention. In addition, singular forms are intended to include plural forms as well, unless the context clearly indicates otherwise. In the present specification, terms such as "including," "composed of ~," and the like are intended to indicate the existence of features, numbers, operations, actions, components, parts, or combinations thereof disclosed in the specification. It should be understood that the terms such as "including," "composed of ~," and the like are not intended to preclude the possibility that one more other features, numbers, steps, actions, components, parts, or combinations thereof may be present or added.

Although the terms including ordinal numbers such as "first," "second," and the like may be used to describe various components, these components should not be limited by these terms. The terms are used only for the purpose of distinguishing one component from another.

When it is said that a component is "connected" to another component, it should be understood that the component is directly connected to the another component or still another component may be interposed therebetween. On the other hand, when it is said that a component is "directly connected" or "directly linked" to another component, it should be understood that other components are not present therebetween.

When it is said that a component is on an "upper portion" or "lower portion" of another component, it should be understood that the component may be disposed directly on another component, as well as still another component may be interposed therebetween.

Unless otherwise defined, all terms used herein, including technical and scientific terms, have the same meaning as commonly understood by one of ordinary skill in the art to which the present invention belongs. It should be further understood that terms, such as those defined in commonly used dictionaries, should be interpreted as having a meaning that is consistent with their meaning in the context of the relevant art and are not to be interpreted in an idealized or overly formal sense unless expressly so defined herein.

Hereinafter, a lamination device according to an embodiment of the present invention will be described.

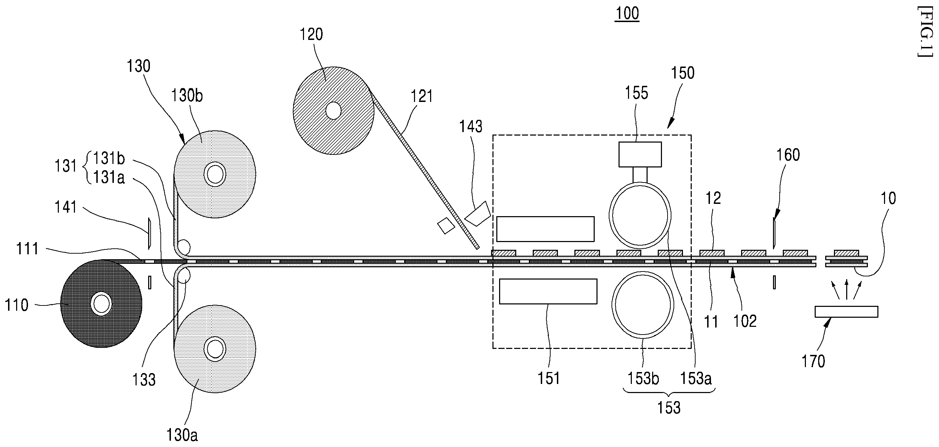

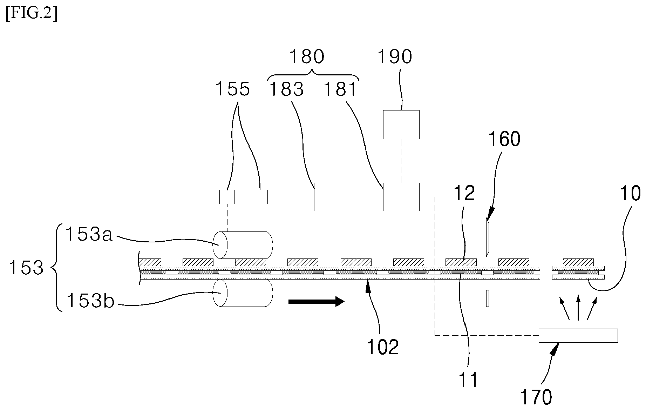

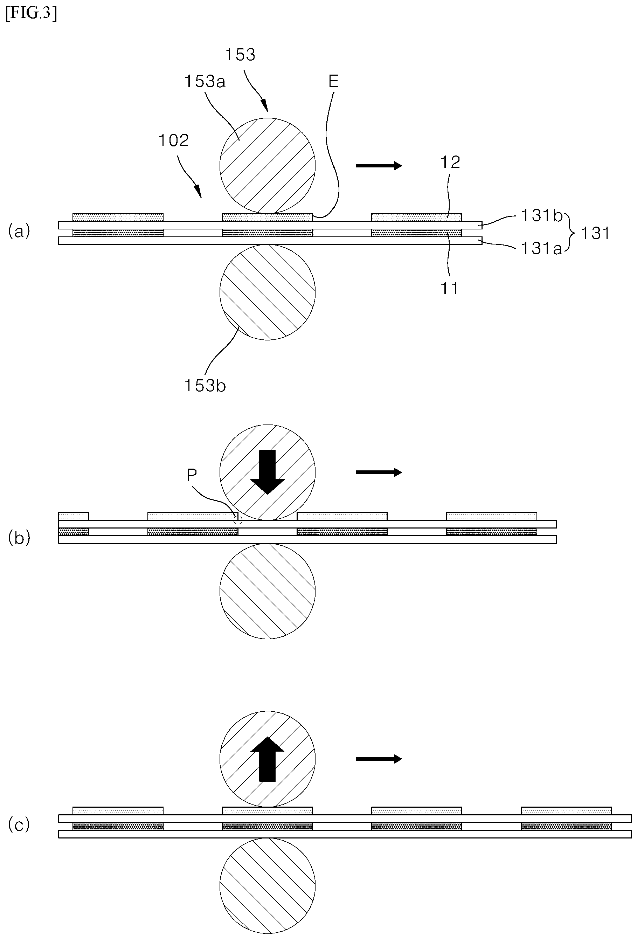

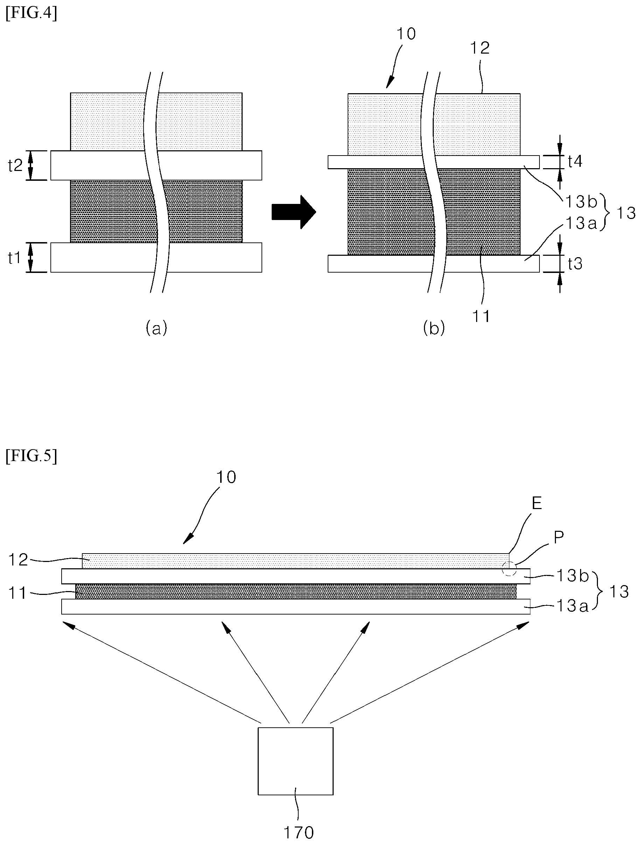

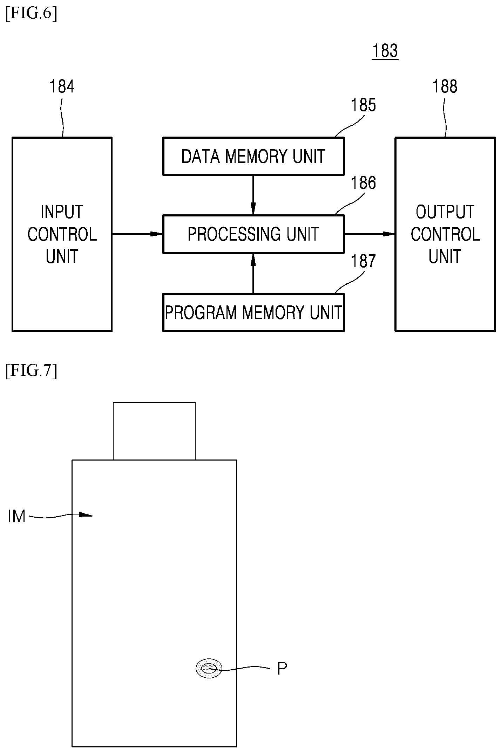

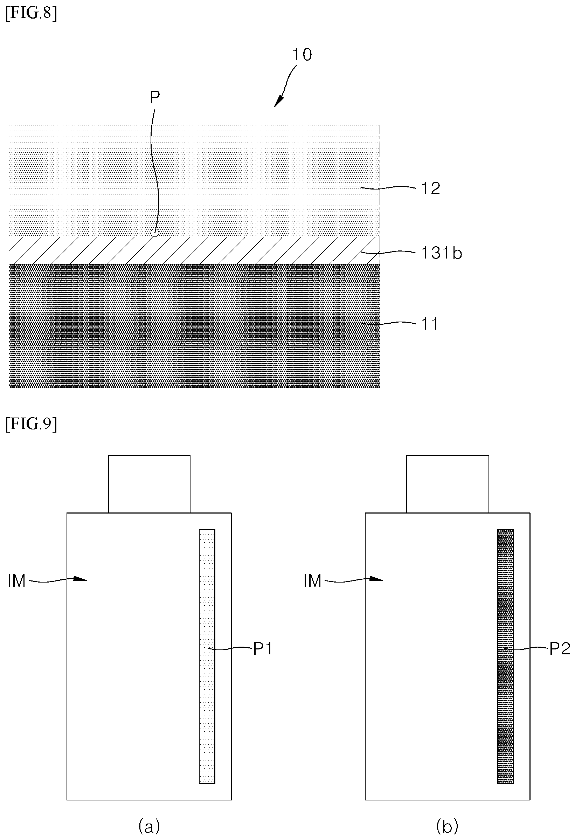

FIG. 1 is a view schematically illustrating of a lamination device according to the present invention, FIG. 2 is a view schematically illustrating a vision unit and a control unit in the lamination device according to the present invention, FIG. 3 is a view schematically illustrating a state in which an electrode laminate is pressed by a lamination roller unit in the lamination device according to the present invention, FIG. 4 is a view schematically illustrating a state in which a thickness of a separator sheet of a unit cell cut from the electrode laminate according to the present invention is formed to be less than that of the conventional separator, FIG. 5 is a view schematically illustrating a state in which the vision unit captures an image IM of the unit cell according to the present invention, and FIG. 6 is a block diagram schematically illustrating an automatic control unit (programmable logic controller (PLC)) constituting the control unit according to the present invention. FIG. 7 is a view schematically illustrating the image IM of the unit cell captured by the vision unit according to the present invention, FIG. 8 is a cross-sectional view schematically illustrating a state in which a damaged portion is generated in a second separator in the unit cell of FIG. 7, and FIG. 9 is a view schematically illustrating a state in which a pressed mark is formed at an edge portion of the separator in the captured image IM of the unit cell according to the present invention.

Referring to FIGS. 1 to 7, in a lamination device 100 according to an embodiment of the present invention, a vision unit 170 captures an image IM of a unit cell 10, and a control unit 180 calculates a brightness value of the captured image IM to correct a pressure of a lamination roller unit 153. As the pressure of the lamination roller unit 153 is corrected, an impact between the lamination roller unit 153 and electrodes 11 and 12 attached to an electrode laminate 102 may be mitigated, thereby preventing a separator sheet 131 or the electrodes 11 and 12 from being damaged by the impact of the lamination roller unit 153. In addition, since the control unit 180 corrects the pressure of the lamination roller unit 153 in real time, and the vision unit 170 checks whether the unit cell 10 is defective in real time, a defect rate of the unit cell 10 in the lamination device 100 may be significantly reduced.

The unit cell 10 may be any one of a mono-cell, a bi-cell, and a full cell.

The mono-cell refers to a cell having a structure in which a separator 13 is disposed on one outermost surface thereof and the electrode is disposed on the other outermost surface thereof. For example, the mono-cell may be formed by laminating a first separator 13a, a first electrode 11, a second separator 13b, and a second electrode 12. In addition, the mono-cell may also be formed of three or more electrodes and three or more separators 13 interposed between the respective electrodes.

The bi-cell refers to a cell having a structure in which electrodes having the same polarity are disposed on both outermost surfaces. The bi-cell may be formed by laminating the first electrode 11, the first separator 13a, the second electrode 12, the second separator 13b, and the first electrode 11. In addition, the bi-cell may also be formed of five or more odd number of electrodes and three or more separators 13 laminated between the respective electrodes.

The full cell refers to a cell having a structure in which electrodes having opposite polarities are disposed on both outermost surfaces. The full cell may be formed by laminating the first electrode 11, the first separator 13a, and the second electrode 12. In addition, the full cell may also be formed of four or more even number of electrodes and three or more separators 13 laminated between the respective electrodes.

The lamination device 100 of the present invention may manufacture one of the mono-cell, the bi-cell, and the full cell, and may change the installation number of electrode rolls 110 and 120 and separator rolls 130 according to the type of the unit cell 10. FIGS. 1 and 2 each illustrate one example of the lamination device 100 configured to manufacture the mono-cell.

The lamination device 100 includes a first electrode roll 110 on which a first electrode sheet 111 is wound. The first electrode sheet 111 is unwound from the first electrode roll 110 and supplied toward a pinch roller 133. One surface or both surfaces of the first electrode sheet 111 are coated with an active material.

The lamination device 100 includes a second electrode roll 120 on which a second electrode sheet 121 is wound. The second electrode sheet 121 is unwound from the second electrode roll 120 and supplied toward a lamination unit 150. One surface or both surfaces of the second electrode sheet 121 are coated with an active material.

The first electrode sheet 111 may be a negative electrode sheet coated with a negative electrode active material, and the second electrode sheet 121 may be a positive electrode sheet coated with a positive electrode active material. In addition, the first electrode sheet 111 may be a positive electrode sheet coated with a positive electrode active material, and the second electrode sheet 121 may be a negative electrode sheet coated with a negative electrode active material.

The lamination device 100 includes a plurality of separator rolls 130 each having a separator sheet 131 wound thereon. The plurality of separator rolls 130 may include a first separator roll 130a on which a first separator sheet 131a is wound, and a second separator roll 130b on which a second separator sheet 131b is wound.

The pinch roller 133 is installed between the first separator roll 130a and the second separator roll 130b so as to overlap the first separator sheet 131a and the second separator sheet 131b. A first cutter 141 is installed between the first electrode roll 110 and the pinch roller 133. The first cutter 141 cuts the first electrode sheet 111 unwound from the first electrode roll 110 to form the first electrode 11. The first electrode 11 is laminated between the first separator sheet 131a and the second separator sheet 131b at regular intervals. The pinch roller 133 presses the first separator sheet 131a and the second separator sheet 131b toward the first electrode 11 such that the first separator sheet 131a and the second separator sheet 131b are laminated. At least two pinch rollers 133 may be installed to press the first separator sheet 131a and the second separator sheet 131b so as to be laminated. In addition, the pinch roller 133 is a component configured to change a transfer direction of the separator sheet 131, and the number of the pinch rollers 133 may be changed according to the installation number of the separator rolls 130.

The separator sheet 131 is laminated on both surfaces of each of the first electrodes 11 arranged in a line. For example, the first separator sheet 131a is laminated on one surface of each of the first electrodes 11 arranged in a line, and the second separator sheet 131b is laminated on the other surface of each of the first electrodes 11 arranged in a line.

A second cutter 143 is disposed at an entrance side of the lamination unit 150, to which the second electrode 12 is introduced. The second cutter 143 cuts the second electrode sheet 121 unwound from the second electrode roll 120 and seats the cut second electrode sheet 121 on an upper surface of the second separator sheet 131b. Accordingly, the electrode laminate 102 has a structure in which a plurality of first electrodes 11 are arranged between the first separator sheet 131a and the second separator sheet 131b, and a plurality of second electrodes 12 are arranged on the upper surface of the second separator sheet 131b.

As shown in FIG. 1, one first electrode sheet 111, one second electrode sheet 121, and two separator sheets 131 may be laminated on the electrode laminate 102. In addition, two or more first electrode sheets 111, two or more second electrode sheets 121, and four or more separator sheets 131 may be laminated on the electrode laminate 102. The lamination number of the electrode sheets 111 and 121 and the separator sheets 131 may be variously changed.

In the present invention, the positive electrode active material coated on the first electrode sheet 111 and the negative electrode active material coated on the second electrode sheet 121 may be used without limitation as long as they are active materials known in the art.

The positive electrode active material may include a lithium intercalation material, as a main component, such as a layered compound such as lithium cobalt oxide (LiCoO₂) and lithium nickel oxide (LiNiO₂) or a compound substituted with one or more transition metals; lithium manganese oxides (LiMnO₂) such as the chemical formula Li₁₊ₓMn₂ₓO₄ (where x is 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni site type lithium nickel oxides expressed by the chemical formula LiNi₁₋ₓMₓO₂ (where M is Co, Mn, Al, Cu, Fe, Mg, B, or Ga and x is 0.01 to 0.3); lithium manganese composite oxides expressed by the chemical formula LiMn₂₋ₓMₓO₂ (where M=Co, Ni, Fe, Cr, Zn, or Ta and x=0.01 to 0.1) or Li₂Mn₃MO₈ (where M=Fe, Co, Ni, Cu, or Zn); LiMn₂O₄ in which Li in the formula is partially substituted with alkaline earth metal ions; a disulfide compound; and Fe₂(MoO₄)₃ or a composite oxide formed by a combination thereof. Although the above types are used as the positive electrode active material, the present invention is not limited thereto.

For example, a positive electrode current collector has a thickness of 3 to 500 µm. The positive electrode current collector is not particularly limited as long as it has conductivity without causing chemical changes in a battery. Examples of the positive electrode current collector may include stainless steel, aluminum, nickel, titanium, calcined carbon, or aluminum or stainless steel whose surface has been treated with carbon, nickel, titanium, silver, or the like. The positive electrode current collector may have fine irregularities formed in a surface thereof to increase the adhesion of the positive electrode active material. The positive electrode current collector may be used in various forms such as a film, a sheet, a foil, a net, a porous body, a foamed body, a non-woven fabric body, and the like.

A conductive material may be additionally mixed with positive electrode active material particles. The conductive material is added in an amount of 1 to 50 wt% based on the total weight of the mixture including the positive electrode active material. The conductive material is not particularly limited as long as it has high conductivity without causing chemical changes in a battery. Examples of the conductive material may include graphite such as natural graphite and artificial graphite; carbon black such as carbon black, acetylene black, Ketjen black, channel black, furnace black, lamp black, and thermal black; conductive fibers such as carbon fiber and metal fiber; metal powders such as carbon fluoride, aluminum, and nickel powders; conductive whiskers such as zinc oxide and potassium titanate; conductive oxides such as titanium oxide; and conductive materials such as a polyphenylene derivative.

Further, the negative electrode sheet may be fabricated by applying and drying negative electrode active material particles on a negative electrode current collector, and may further include components such as the conductive material described above, a binder, a solvent, and the like as needed.

For example, the negative electrode current collector has a thickness of 3 to 500 µm. The negative electrode current collector is not particularly limited as long as it has conductivity without causing chemical changes in a secondary battery. Examples of the negative electrode current collector may include copper, stainless steel, aluminum, nickel, titanium, calcined carbon, aluminum or stainless steel whose surface has been treated with carbon, nickel, titanium, silver, or the like, an aluminum-cadmium alloy, or the like. In addition, like the positive electrode current collector, fine irregularities may be formed in the surface to enhance the binding force of the negative electrode active material, and may be used in various forms such as a film, a sheet, a foil, a net, a porous body, a foamed body, a non-woven fabric body, and the like.

Examples of the negative electrode active material may include a carbon such as non-graphitized carbon or graphite-based carbon; a metal complex oxide such as LiₓFe₂O₃ (0≤x≤1), LiₓWO₂ (0≤x≤1), SnₓMe₁₋ₓMe'yO_{z} (Me: Mn, Fe, Pb, Ge; Me': Al, B, P, Si, elements in Group I, II, and III on the periodic table, a halogen; 0<x≤1; 1≤y≤3; 1 ≤z≤8); a lithium metal; a lithium alloy; a silicon-based alloy; a tin-based alloy; an oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer such as polyacetylene; a Li-Co-Ni-based material, or the like.

A binder polymer capable of being used in the electrode sheets 11 and 12 is a component that assists in bonding the electrode active material particles and the conductive material and binding the electrode active material particles to the electrode current collector, and added in an amount of, for example, 1 to 50 wt% based on the total weight of the mixture including the electrode active material. Examples of the binder polymer may include any one binder polymer selected from the group consisting of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, or a mixture of two or more thereof, but the present invention is not limited thereto.

Non-limiting examples of the solvent used in the manufacturing of the electrodes include acetone, tetrahydrofuran, methylene chloride, chloroform, dimethylformamide, N-methyl-2-pyrrolidone (NMP), cyclohexane, water, or a mixture thereof. Such solvents provide an appropriate level of viscosity so that a slurry coating layer may be formed at a desired level on a surface of the electrode current collector.

The separator 13 includes a porous polymer substrate, and a porous coating layer positioned on both surfaces of the porous polymer substrate and including inorganic particles and a binder polymer.

The porous polymer substrate may be a polyolefin-based porous substrate.

The polyolefin porous substrate may be in the form of a film or a non-woven web. By having the porous structure as described above, the electrolyte may be smoothly moved between the positive electrode and the negative electrode. The porous structure may increase an electrolyte impregnation property of the substrate itself so that excellent ion conductivity may be secured, and may prevent an increase in resistance inside an electrochemical device so that performance degradation of the electrochemical device may be prevented.

The polyolefin porous substrate used in the present invention may be any planar porous substrate that is generally used in electrochemical devices, and the material or shape thereof may be variously selected as desired.

The polyolefin porous substrate may be, but is not limited to, a film or non-woven web formed of high-density polyethylene, low-density polyethylene, linear low-density polyethylene, ultrahigh molecular weight polyethylene, polypropylene, or a mixture of two or more thereof. However, the present invention is not limited thereto.

When the separator 13 according to one embodiment of the present invention is used, since the porous coating layer is provided on both sides of the porous polymer substrate, a solid electrolyte interface layer may be uniformly formed due to the improvement of impregnation performance with respect to the electrolyte, and superior air permeability may be secured as compared to a conventional single-sided inorganic-coated separator 13. For example, the air permeability may be within 120 sec/100 cc. In addition, even when the inorganic porous coating layer is provided on both sides of the porous polymer substrate, a thickness comparable to that of the conventional single-sided inorganic-coated separator may be realized.

Further, when the separator 13 according to one embodiment of the present invention is used, stability of the separator 13 may be improved so that heat- and pressure-resistant properties may be secured. Specifically, it is possible to secure a heat-resistant property having a heat-shrinkage property of 5% or less at 180°C and secure a puncture strength of 550 gf or more, and damage or penetration of the separator 13 in a step portion may be prevented when core deformation occurs during a cycle of the secondary battery in which the separator 13 is employed.

The lamination unit 150 includes a heater unit 151, the lamination roller unit 153, and a pressure adjusting unit 155.

The heater unit 151 heats the separator sheet 131 and the electrodes 11 and 12. The heater units 151 are disposed on both sides of the separator sheet 131 to heat the separator sheet 131 and the electrodes 11 and 12 from the both sides. The heater units 151 are installed on both sides of the first electrode sheet 111 to be spaced apart from the separator sheet 131. In order to uniformly heat throughout the electrodes 11 and 12 and the separator sheet 131, the heater unit 151 may be formed to be longer than a width of the separator sheet 131.

The lamination roller unit 153 presses the separator sheet 131 and the electrodes 11 and 12. The lamination roller unit 153 includes an upper lamination roller 153a and a lower lamination roller 153b respectively disposed on both sides of the separator sheet 131 to press the separator sheet 131 and the electrodes 11 and 12 from the both sides.

The pressure adjusting unit 155 is connected to the lamination roller unit 153 to adjust the pressure that is applied to the electrode laminate 102 by the lamination roller unit 153. In order to uniformly press throughout the first electrode sheet 111 and the separator sheet 131, the lamination roller unit 153 may be formed to be longer than the width of the separator sheet 131.

The lower lamination roller 153b is fixed to a lower side of the separator sheet 131, and the upper lamination roller 153a is installed on an upper side of the separator sheet 131 to be liftable and lowerable. The pressure adjusting unit 155 is connected to the upper lamination roller 153a to lift and lower the upper lamination roller 153a. At this time, the pressure adjusting unit 155 may correct the pressure by lifting and lowering the upper lamination roller 153a of the lamination roller unit 153. When the pressure adjusting unit 155 corrects the pressure, the lower lamination roller 153b remains a fixed state.

Of course, it is also possible that the pressure adjusting unit 155 is connected to each of the upper lamination roller 153a and the lower lamination roller 153b and lifts and lowers each of the upper lamination roller 153a and the lower lamination roller 153b.

The pressure adjusting unit 155 includes a cylinder (not shown) and a regulator (not shown).

The cylinder is connected to the lamination roller unit 153. When a fluid is supplied to the cylinder, the cylinder increases the pressure of the lamination roller unit 153, and as the fluid is discharged from the cylinder, the pressure of the lamination roller unit 153 is reduced.

The regulator receives a control signal of the control unit 180 to adjust the pressure of the cylinder. The regulator adjusts the pressure of the cylinder by adjusting the amount of fluid supplied to or discharged from the cylinder. As the regulator adjusts the pressure of the cylinder, the pressure applied to the electrode laminate 102 by the lamination roller unit 153 may be corrected.

An initial pressure value for the pressure adjusting unit 155 is preset in the control unit 180. The initial pressure value may be variously changed in consideration of a thickness and a width of the electrode laminate 102, a thickness of the second electrode 12 in the electrode laminate 102, a thickness of the separator sheet 131 in the electrode laminate 102, a transfer speed of the electrode laminate 102, physical properties of the separator sheet 131, and the like.

For example, as the thickness and width of the electrode laminate 102 increase, the initial pressure value may be increased. In addition, as the thickness of the second electrode 12 increases in the electrode laminate 102, a step difference between the second electrode 12 and the second separator sheet 131b increases, so that the initial pressure value of the pressure adjusting unit 155 may be relatively reduced to mitigate an impact between the lamination roller unit 153 and an edge portion E of the second electrode 12. In addition, as the thickness of the separator sheet 131 decreases in the electrode laminate 102, the possibility of damage to the separator sheet 131 increases even with a relatively small impact, and thus the initial pressure value of the pressure adjusting unit 155 may be relatively reduced in order to minimize damage to the separator sheet 131. In addition, even when the pressure of the lamination roller unit 153 is the same, the possibility of damage to the separator sheet 131 increases as the transfer speed of the electrode laminate 102 increases, and thus the initial pressure value of the pressure adjusting unit 155 may be relatively reduced in order to minimize damage to the separator sheet 131.

In addition, an allowable brightness range for a calculated brightness value is preset in the control unit 180. When it is determined that the calculated brightness value is outside the allowable brightness range, the control unit 180 controls the pressure adjusting unit 155 to correct the pressure of the lamination roller unit 153. The above-described brightness value is a quantification of how dark or light the separator sheet image-captured by the vision unit 170 is in contrast, which will be described below. The contrast of the captured image IM becomes brighter as the brightness value is high, and the contrast of the captured image IM becomes darker as the brightness value is low.

Here, the allowable brightness range for the calculated brightness value may be variously changed in consideration of the thickness and width of the electrode laminate 102, the thickness of the second electrode 12 in the electrode laminate 102, the thickness of the separator sheet 131 in the electrode laminate 102, the transfer speed of the electrode laminate 102, the physical properties of the separator sheet 131, and the like.

When the electrode laminate 102 is initially supplied to the lamination unit 150, the pressure adjusting unit 155 presses the electrode laminate 102 with the initial pressure value preset in the control unit 180. In addition, when the vision unit 170 reads the image IM of the unit cell 10 and the brightness value of the unit cell 10 is outside the allowable brightness range preset in the control unit 180, a pressure value of the pressure adjusting unit 155 is corrected in real time.

A final cutter unit 160 is disposed on a downstream side of the lamination roller unit 153. The final cutter unit 160 cuts the separator sheet 131 and the electrodes to form the unit cell 10. In this case, the final cutter unit 160 cuts a portion of the separator sheet 131 between two adjacent electrodes.

The vision unit 170 is disposed on a downstream side of the final cutter unit 160 and captures the image IM of the unit cell 10. The vision unit 170 irradiates light to the unit cell 10 cut out by the final cutter unit 160, and measures light reflected from the unit cell 10 to capture the image IM of the unit cell 10.

The control unit 180 calculates a brightness value of the captured image IM received from the vision unit 170. For example, the control unit 180 calculates a calculated brightness value corresponding to a portion P (see FIGS. 3 and 5) of the separator in contact with the edge portion E of each of the electrodes 111 and 12 from the calculated image IM. In addition, the control unit 180 controls the pressure adjusting unit 155 to correct the pressure of the lamination roller unit 153 according to the calculated brightness value.

The correction of the pressure of the lamination roller unit 153 as described above will be described in detail as follows.

When the electrode laminate 102 is supplied to the lamination unit 150, the lamination roller unit 153 presses the electrode laminate 102 while rotating. At this time, when the lamination roller unit 153 is positioned on an upper surface of the second electrode 12, the electrode laminate 102 is relatively strongly pressed (see FIG. 3A). When the lamination roller unit 153 is positioned between the two adjacent second electrodes 12, the electrode laminate 102 is relatively weakly pressed (see FIG. 3B).

However, since each of the second electrodes 12 is laminated to be stepped with the second separator sheet 131b, an impact is applied to the edge portion E of the second electrode 12 whenever the edge portion E of the second electrode 12 comes into contact with the upper lamination roller 153a. Furthermore, as the electrode laminate 102 is supplied to the lamination roller unit 153 at a high speed to increase the productivity of the secondary battery, the impact applied to the edge portion E of the second electrode 12 may increase. Here, since the first separator sheet 131a and the second separator sheet 131b are formed of a porous material through which ions can pass, the edge portion E of the second electrode 12 is pressed downward by the impact, and thus the second separator sheet 131 and the first separator sheet 131a are pressed in a thickness direction. In the first separator sheet 131a and the second separator sheet 131, a pressed mark or a damaged portion may be generated on the portion P corresponding to the edge portion E of the second electrode 12 or a portion near the portion P.

In addition, as the thickness of the second electrode 12 increases in the electrode laminate 102, the step difference between the second electrode 12 and the second separator sheet 131b is increased, and thus the amount of impact between the lamination roller unit 153 and the second electrode 12 increases. In addition, as the thickness of the separator sheet 131 decreases in the electrode laminate 102, the possibility of damage to the separator sheet 131 may be further increased even when the same impact force is applied to the separator sheet 131.

As the electrode laminate 102 is cut out by the final cutter unit 160, the unit cell 10 is generated. The vision unit 170 captures the image IM of the unit cell 10 from a lower side of the unit cell 10.

At this time, when the separator 13 of the unit cell 10 does not have the pressed mark or the damaged portion, the captured image IM of the separator 13 is entirely displayed in a white color or a color close to the white color (high brightness). In contrast, when the separator 13 has the pressed mark or the damaged portion, in the captured image IM of the separator 13, the portion P corresponding to the edge portion E of the second electrode 12 or the portion near the portion P is displayed in a dark color (low brightness). As a force with which the separator 13 is pressed by the second electrode 12 is stronger, the portion corresponding to the edge portion E of the second electrode 13 is displayed in a darker color. An example in which a portion P1 of high brightness is partially generated in the captured image IM of the separator 13 is illustrated in FIG. 9A, and an example in which a portion P2 of low brightness is partially generated in the captured image IM of the separator 13 is illustrated in FIG. 9B.

Meanwhile, as the thickness of the second electrode 12 increases in the unit cell 10, the portion P of the separator corresponding to the edge portion E of the second electrode 12 is displayed in a darker color. In addition, as the thickness of the separator 13 decreases, the separator portion P corresponding to the edge portion E of the second electrode 12 is displayed in a darker color. In addition, as the damage degree of the damaged portion becomes severe, the contrast becomes darker.

Since the higher the brightness value, the lighter the contrast, and the lower the brightness value, the darker the contrast, it can be seen that the lower the brightness value, the more severe the degree of depression or damage of the separator sheet 131. Accordingly, the degree of damage to the separator 13 may be measured by using the brightness value of the image IM captured by the vision unit 170. FIG. 7 illustrates an example of the captured image IM in which the slightly damaged portion P is generated, and FIG. 8 illustrates the separator in which the slightly damaged portion P is generated.

The pressure of the lamination roller unit 153 may be corrected based on the pressure when the lamination roller unit 153 is positioned on the upper surface of the second electrode 12. The pressure when the lamination roller unit 153 is positioned on the upper surface of the second electrode 12 has the smallest pressure deviation as compared to the pressure when the lamination roller unit 153 is positioned between the two second electrodes 12. Accordingly, the pressure of the lamination roller unit 153 may be accurately corrected by correcting the pressure of the lamination roller unit 153 based on the largest pressure among the pressures applied to the electrode laminate 102.

Referring to FIG. 2, the control unit 180 includes a vision control unit 181 and an automatic control unit 183 (programmable logic control unit (PLC)).

The vision control unit 181 receives the image IM captured by the vision unit 170. The vision control unit 181 controls the vision unit 170 to emit light from the vision unit 170, and receives the captured image IM captured by the vision unit 170. The vision control unit 181 is represented as a vision computer.

The automatic control unit 183 calculates a calculated brightness value by calculating the captured image IM received from the vision control unit 181, and controls the pressure adjusting unit 155 to correct the pressure of the lamination roller unit 153 when it is determined that the calculated brightness value is outside the preset allowable brightness range.

Referring to FIG. 6, the automatic control unit 183 (PLC) includes an input control unit 184, a data memory unit 185, a processing unit 186, a program memory unit 187, and an output control unit 188. The input control unit 184 receives the captured image IM via an input portion, and the input control unit 184 transmits the captured image IM to the processing unit 186. The processing unit 186 calculates the calculated brightness value by calculating the captured image IM, and calculates a pressure correction value when it is determined by the program that the calculated brightness value is outside the allowable brightness range. Subsequently, the output control unit 188 outputs the pressure correction value to the pressure adjusting unit 155, and the pressure adjusting unit 155 corrects the pressure of the lamination roller unit 153 according to the pressure correction value.

Referring to FIG. 4, in order to increase a charge capacity in a secondary battery of the same size, in recent years, thicknesses t3 and t4 of the separators 13 of the unit cell 10 are formed to be small while thicknesses of the electrodes 11 and 12 are formed to be large. For example, in the conventional unit cell 10, the separators 13 having thicknesses t1 and t2 of approximately 19 to 20 um are used, but recently, the separators 13 having thicknesses t3 and t4 of approximately 14 to 16 um are used. Thus, according to the present invention, in the unit cell 10, the thicknesses of the electrodes 11 and 12 may be increased by approximately 25% as the thicknesses t3 and t4 of the separators 13 of the same size are reduced by approximately 25%.

The electrodes 11 and 12 may be thickened by as much as the thicknesses t3 and t4 of the separators 13 are reduced. In the electrodes 11 and 12, an active material is applied to a collector, and fine unevenness is formed on a surface of the collector to increase the adhesion of the active material. Accordingly, the electrodes 11 and 12 may have a small height deviation in a longitudinal direction or a width direction due to the unevenness of the surface of the collector and the deviation of the application of the active material layer.

In addition, while the electrode laminate 102 is being pressed by the lamination roller unit 153 of the lamination device 100, the lamination roller unit 153 may be slightly eccentric by the height deviation of the electrodes 11 and 12. When the following electrodes 11 and 12 approach the lamination roller unit 153 in a state in which the lamination roller unit 153 is eccentric by the preceding electrodes 11 and 12, the lamination roller unit 153 applies an impact to the edge portion E of each of the electrodes 11 and 12, and the portion P of the separator sheet coming in contact with the edge portion E of each of the electrodes 11 and 12 is damaged. At this time, when the lamination roller unit 153 continues to press the electrode laminate 102 with the same pressure, the defect rate of the unit cell 10 may be increased as the damaged portion is frequently generated in the separator sheet 131.

However, in the present invention, the captured image IM of the unit cell 10 is captured in real time, and whether the brightness value of the captured image IM is within the allowable brightness range is determined to determine whether the unit cell 10 is defective. In addition, when a particular unit cell 10 is determined to be defective, the control unit 180 controls the pressure adjusting unit 155 to correct the pressure of the lamination roller unit 153 in real time, thereby significantly reducing the defect rate of the unit cell 10.

The lamination device 100 further includes an alarm unit 190 configured to generate a warning signal when it is determined that the calculated brightness value is outside the allowable brightness range for more than a certain number of times (for a certain period of time) after correcting the pressure of the lamination roller unit 153. In this case, when the calculated brightness value is outside the allowable brightness range for a certain period of time after the correction of the pressure of the lamination roller unit 153, the alarm unit 190 may generate the warning sound. When the alarm unit 190 issues the warning sound, the manufacturing process of the lamination device 100 may be manually or automatically stopped.

As described above, in the present invention, since the pressure of the lamination roller unit 153 is corrected in real time according to the brightness value of the image IM captured by the vision unit 170, it is possible to prevent the separator sheet 131 from being damaged or excessively pressed while the electrode laminate 102 is being laminated. Accordingly, the defect rate of the unit cell 10 may be significantly reduced.

In addition, the thicknesses of the electrodes 11 and 12 laminated on the electrode laminate 102 may vary due to a processing error of the current collector, a coating error of the active material, a lamination error of the electrodes 11 and 12 and the separator sheet 131, and the like. However, in the present invention, since the pressure of the lamination roller unit 153 is corrected in real time according to the brightness value of the captured image IM of the unit cell 10, the impact between the electrodes 11 and 12 having different thicknesses and the lamination roller unit 153 may be mitigated in the electrode laminate 10. Accordingly, damage to the separator sheet 131 may be minimized.

In addition, since the pressure of the lamination roller unit 153 is corrected in real time according to the brightness value of the image IM captured by the vision unit 170, even when the thicknesses t3 and t4 of the separators 13 are reduced in the unit cell 10, the possibility of damage to the separators 13 may be significantly reduced by mitigating the impact applied to the separator 13. Accordingly, the thicknesses of the electrodes 11 and 12 may be increased by as much as the separator 13 becomes thinner in the unit cell 10 of the same thickness. Furthermore, the capacity of a battery may be significantly increased in a battery package in which the unit cell 10 is stacked.

A unit cell manufacturing method using the lamination device of the present invention configured as described above will be described.

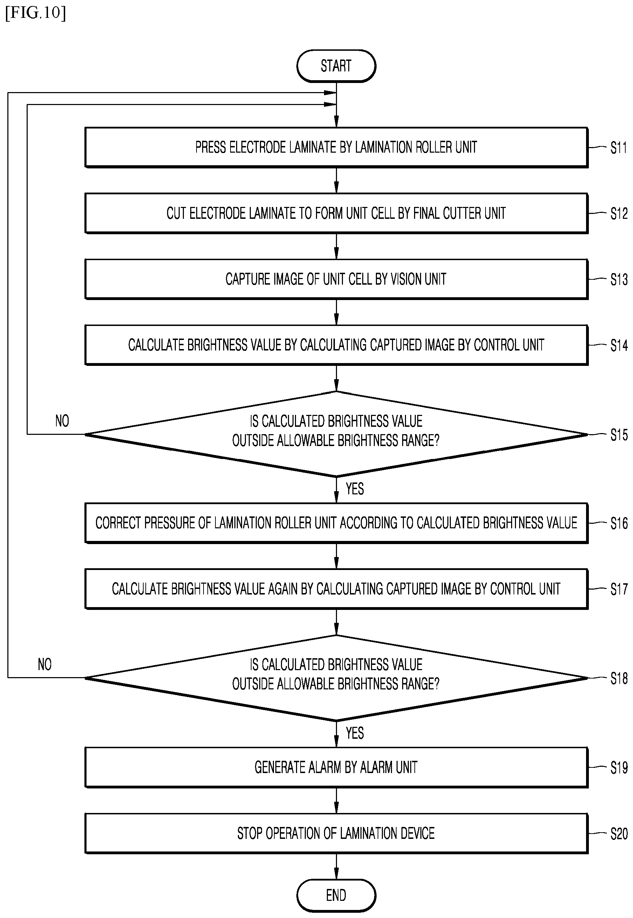

FIG. 10 is a flowchart schematically illustrating a method of manufacturing a unit cell according to the present invention.

Referring to FIG. 10, the electrode laminate 102 is supplied to the lamination unit 150. At this time, the heater unit 151 heats the electrode laminate 102, and the lamination roller unit 153 presses the electrode laminate 102 to laminate the separator sheet 131 and the electrodes 11 and 12 (S11). An initial pressure value for the pressure adjusting unit 155 is preset in the control unit 180.

The final cutter unit 160 cuts the electrode laminate 102 to form the unit cell 10 (S12). At this time, the final cutter unit 160 cuts a portion of the separator sheet 131 between two adjacent electrodes 11 and 12. The unit cell 10 is moved to an upper side of the vision unit 170.

The vision unit 170 captures an image IM of the unit cell 10 (S13). At this time, the vision unit 170 irradiates light to a lower portion of the unit cell 10 cut out by the final cutter unit 160, and measures the light reflected from the unit cell 10 to capture the image IM of the unit cell 10. The vision unit 170 transmits the captured image IM to the control unit 180.

The control unit 180 calculates a brightness value by calculating the captured image IM received from the vision unit 170 (S14). At this time, the control unit 180 calculates a calculated brightness value corresponding to the portion P of the separator coming in contact with the edge portion E of each of the electrodes 11 and 12 of the unit cell 10 from the calculated image IM.

In this case, when the separator sheet 131 of the unit cell 10 is pressed within an allowable range by the lamination roller unit 153, the captured image IM of the separator sheet 131 is entirely displayed in a white color or a color close to the white color (high brightness). On the other hand, when the separator sheet 131 of the unit cell 10 is excessively pressed or damaged beyond the allowable range by the lamination roller unit 153, in the captured image IM of the separator sheet 131, the portion corresponding to the edge portion E of the second electrode 12 or the portion near thereto is displayed in a dark color (low brightness). As a force with which the separator sheet 131 is pressed by the electrode is stronger, the portion corresponding to the edge portion E of the electrode is displayed in a darker color.

In addition, as the thickness of the second electrode 12 in the electrode laminate 102 increases, a step difference between the second electrode 12 and the second separator sheet 131b increases, and thus the amount of impact between the second electrode 12 and the separator sheet 131 increases. In addition, as the thickness of the separator sheet 131 decreases in the electrode laminate 102, the possibility of damage to the separator sheet 131 may be further increased by the impact force of the second electrode 12. Even when a pressure of the lamination roller unit 153 is the same, the possibility of damage to the separator sheet 131 may be increased as a transfer speed of the electrode laminate 102 increases.

The control unit 180 determines whether the calculated brightness value is outside an allowable brightness range (S15). When it is determined that the calculated brightness value is within the allowable brightness range, the control unit 180 maintains the pressure of the lamination roller unit 153 without changing.

When it is determined that the calculated brightness value is outside the allowable brightness range, the control unit 180 controls the pressure adjusting unit 155 to correct the pressure of the lamination roller unit 153 (S16). Here, the allowable brightness range for the calculated brightness value may be variously changed in consideration of a thickness and a width of the electrode laminate 102, the thickness of the second electrode 12 in the electrode laminate 102, the thickness of the separator sheet 131 in the electrode laminate 102, a transfer speed of the electrode laminate 102, physical properties of the separator sheet 131, and the like.

The correction of the pressure of the lamination roller unit 153 may be performed based on the pressure when the lamination roller unit 153 is positioned on an upper surface of the second electrode 12. Accordingly, the amount of pressure of the lamination roller unit 153 may be accurately corrected by correcting the pressure of the lamination roller unit 153 based on the largest pressure among the pressures applied to the electrode laminate 102.

As described above, an impact is applied to the edge portion E of the second electrode 12 at the moment when the edge portion E of the second electrode 12 is in contact with the lamination roller unit 153, and the portion P of the separator sheet in contact with the edge portion E of the second electrode 12 may be pressed or damaged by the impact. In addition, when the electrode laminate 102 is cut by the final cutter unit 160, the damage remains on the portion P of the separator 13 of the unit cell 10, and when the vision unit 170 captures the image IM of the unit cell 10, the brightness value of the pressed or damaged portion of the separator 13 may be displayed in dark. Accordingly, it is possible to determine whether the unit cell 10 is defective based on the brightness value.

The control unit 180 calculates the brightness value again by calculating the captured image IM captured by the vision unit 170 in real time (S17).

It is again determined whether the calculated brightness value is outside the allowable brightness range (S18). At this time, after the correction of the pressure of the lamination roller unit 153, it is again determined whether the calculated brightness value is outside the allowable brightness range for a certain period of time.

The alarm unit 190 generates an alarm and stops the driving of the lamination device 100 (S19 and S20). At this time, when the alarm unit 190 issues a warning sound, the manufacturing process of the lamination device 100 may be manually or automatically stopped.

Although the present invention has been described with reference to the exemplified drawings, it is to be understood that the present invention is not limited to the embodiments and drawings disclosed in this specification, and those skilled in the art will appreciate that various modifications are possible without departing from the scope of the present invention. Further, although the operating effects according to the configuration of the present invention are not explicitly described while describing an embodiment of the present invention, it should be appreciated that predictable effects are also to be recognized by the configuration.

## Claims

1. A lamination device comprising:
a lamination roller unit configured to laminate a separator sheet and an electrode of an electrode laminate by pressing an upper side and a lower side of the electrode laminate;
a pressure adjusting unit connected to the lamination roller unit and configured to adjust a pressure of the lamination roller unit;
a final cutter unit disposed at a downstream side of the lamination roller unit and configured to cut the separator sheet and the electrode from the electrode laminate to form a unit cell;
a vision unit disposed at a downstream side of the final cutter unit and configured to capture an image of the unit cell; **characterised in that** it further comprises
a control unit configured to calculate a brightness value of the image and configured to control the pressure adjusting unit to correct the pressure of the lamination roller unit according to the brightness value.

2. The lamination device of claim 1, wherein the vision unit is disposed adjacent to a lower side of the unit cell.

3. The lamination device of claim 1, wherein the control unit is configured to calculate the brightness value corresponding to a portion of the separator in contact with an edge portion of the electrode in the image.

4. The lamination device of claim 3, wherein an allowable brightness range for the brightness value is preset in the control unit, and the control unit is configured to control the pressure adjusting unit to correct the pressure of the lamination roller unit when it is determined that the brightness value is outside the allowable brightness range.

5. The lamination device of claim 4, wherein the vision unit is configured to capture the image of the unit cell in real time, and the control unit is configured to correct the pressure of the lamination roller unit in real time.

6. The lamination device of claim 1, wherein the control unit is configured to correct the pressure of the lamination roller unit based on a largest pressure of pressures at which the lamination roller unit is configured to press the electrode laminate.

7. The lamination device of claim 1, wherein the control unit includes:
a vision control unit configured to receive the image; and
an automatic control unit configured to calculate the brightness value by analyzing the image and configured to control the pressure adjusting unit to correct the pressure of the lamination roller unit when it is determined that the brightness value is outside of a preset allowable brightness range.

8. The lamination device of claim 1, wherein an initial pressure value of the pressure adjusting unit is preset in the control unit.

9. The lamination device of claim 1, wherein the lamination roller unit includes an upper lamination roller and a lower lamination roller, the lower lamination roller is disposed adjacent to a lower side of the separator sheet, and the pressure adjusting unit is connected to the upper lamination roller, the pressure adjusting unit being configured to lift and lower the upper lamination roller.

10. The lamination device of claim 1, further comprising an alarm unit configured to generate a warning sound when it is determined that the brightness value is outside an allowable brightness range after the pressure of the lamination roller unit is corrected.

11. A method of manufacturing a unit cell, the method comprising:
laminating a separator sheet and an electrode of an electrode laminate by pressing the electrode laminate using a lamination roller unit;
cutting the electrode laminate to form the unit cell using a final cutter unit;
capturing an image of the unit cell using a vision unit; and
calculating a brightness value using a control unit by analyzing the image captured by the vision unit and controlling a pressure adjusting unit to correct a pressure of the lamination roller unit according to the brightness value.

12. The method of claim 11, wherein the control unit calculates the brightness value corresponding to a portion of the separator in contact with an edge portion of the electrode of the unit cell in the image.

13. The method of claim 12, wherein an allowable brightness range for the brightness value is preset in the control unit, and the control unit controls the pressure adjusting unit to correct the pressure of the lamination roller unit when it is determined that the brightness value is outside of the allowable brightness range.

14. The method of claim 11, wherein the control unit corrects the pressure of the lamination roller unit based on a largest pressure of pressures at which the lamination roller unit presses the electrode laminate.

15. The method of claim 11, wherein the pressure adjusting unit corrects the pressure by lifting and lowering an upper lamination roller of the lamination roller unit.

## Patentansprüche

1. Laminierungsvorrichtung aufweisend:
eine Laminierungswalzeneinheit, die konfiguriert ist, eine Separatorfolie und eine Elektrode eines Elektrodenlaminats durch Pressen einer oberen Seite und einer unteren Seite des Elektrodenlaminats zu laminieren;
eine Druckeinstelleinheit, die mit der Laminierungswalzeneinheit verbunden ist und konfiguriert ist, einen Druck der Laminierungswalzeneinheit einzustellen;
eine Endschneideeinheit, die an einer stromabwärtigen Seite der Laminierungswalzeneinheit angeordnet ist und konfiguriert ist, die Separatorfolie und die Elektrode von dem Elektrodenlaminat zu schneiden, um eine Einheitszelle zu bilden;
eine Sichteinheit, die an einer stromabwärtigen Seite der Endschneideeinheit angeordnet ist und konfiguriert ist, ein Bild der Einheitszelle aufzunehmen;
**dadurch gekennzeichnet, dass** die Laminierungsvorrichtung ferner aufweist
eine Steuereinheit, die konfiguriert ist, einen Helligkeitswert des Bildes zu berechnen und die Druckeinstelleinheit zu steuern, um den Druck der Laminierungswalzeneinheit gemäß dem Helligkeitswert zu korrigieren.

2. Laminierungsvorrichtung nach Anspruch 1, wobei die Sichteinheit benachbart zu einer unteren Seite der Einheitszelle angeordnet ist.

3. Laminierungsvorrichtung nach Anspruch 1, wobei die Steuereinheit konfiguriert ist, den Helligkeitswert entsprechend einem Abschnitt des Separators in Kontakt mit einem Kantenabschnitt der Elektrode in dem Bild zu berechnen.

4. Laminierungsvorrichtung nach Anspruch 3, wobei ein zulässiger Helligkeitsbereich für den Helligkeitswert in der Steuereinheit voreingestellt ist und die Steuereinheit konfiguriert ist, die Druckeinstelleinheit zu steuern, um den Druck der Laminierungswalzeneinheit zu korrigieren, wenn bestimmt wird, dass der Helligkeitswert außerhalb des zulässigen Helligkeitsbereichs liegt.

5. Laminierungsvorrichtung nach Anspruch 4, wobei die Sichteinheit konfiguriert ist, das Bild der Einheitszelle in Echtzeit aufzunehmen, und die Steuereinheit konfiguriert ist, den Druck der Laminierungswalzeneinheit in Echtzeit zu korrigieren.

6. Laminierungsvorrichtung nach Anspruch 1, wobei die Steuereinheit konfiguriert ist, den Druck der Laminierungswalzeneinheit basierend auf einem größten Druck von Drücken, bei denen die Laminierungswalzeneinheit konfiguriert ist, das Elektrodenlaminat zu pressen, zu korrigieren.

7. Laminierungsvorrichtung nach Anspruch 1, wobei die Steuereinheit aufweist:
eine Sichtsteuereinheit, die konfiguriert ist, das Bild zu empfangen; und
eine automatische Steuereinheit, die konfiguriert ist, den Helligkeitswert durch Analysieren des Bildes zu berechnen und die Druckeinstelleinheit zu steuern, um den Druck der Laminierungswalzeneinheit zu korrigieren, wenn bestimmt wird, dass der Helligkeitswert außerhalb eines voreingestellten zulässigen Helligkeitsbereichs liegt.

8. Laminierungsvorrichtung nach Anspruch 1, wobei ein anfänglicher Druckwert der Druckeinstelleinheit in der Steuereinheit voreingestellt ist.

9. Laminierungsvorrichtung nach Anspruch 1, wobei die Laminierungswalzeneinheit eine obere Laminierungswalze und eine untere Laminierungswalze aufweist, die untere Laminierungswalze benachbart zu einer unteren Seite der Separatorfolie angeordnet ist und die Druckeinstelleinheit mit der oberen Laminierungswalze verbunden ist, wobei die Druckeinstelleinheit konfiguriert ist, die obere Laminierungswalze anzuheben und abzusenken.

10. Laminierungsvorrichtung nach Anspruch 1, ferner aufweisend eine Alarmeinheit, die konfiguriert ist, einen Warnton zu erzeugen, wenn bestimmt wird, dass der Helligkeitswert außerhalb eines zulässigen Helligkeitsbereichs liegt, nachdem der Druck der Laminierungswalzeneinheit korrigiert wurde.

11. Verfahren zum Herstellen einer Einheitszelle, wobei das Verfahren aufweist:
Laminieren einer Separatorfolie und einer Elektrode eines Elektrodenlaminats durch Pressen des Elektrodenlaminats unter Verwendung einer Laminierungswalzeneinheit;
Schneiden des Elektrodenlaminats, um die Einheitszelle zu bilden, unter Verwendung einer Endschneideeinheit;
Aufnehmen eines Bildes der Einheitszelle unter Verwendung einer Sichteinheit; und
Berechnen eines Helligkeitswerts unter Verwendung einer Steuereinheit durch Analysieren des von der Sichteinheit aufgenommenen Bildes und Steuern einer Druckeinstelleinheit, um einen Druck der Laminierungswalzeneinheit gemäß dem Helligkeitswert zu korrigieren.

12. Verfahren nach Anspruch 11, wobei die Steuereinheit den Helligkeitswert entsprechend einem Abschnitt des Separators in Kontakt mit einem Kantenabschnitt der Elektrode der Einheitszelle in dem Bild berechnet.

13. Verfahren nach Anspruch 12, wobei ein zulässiger Helligkeitsbereich für den Helligkeitswert in der Steuereinheit voreingestellt ist und die Steuereinheit die Druckeinstelleinheit steuert, um den Druck der Laminierungswalzeneinheit zu korrigieren, wenn bestimmt wird, dass der Helligkeitswert außerhalb des zulässigen Helligkeitsbereichs liegt.

14. Verfahren nach Anspruch 11, wobei die Steuereinheit den Druck der Laminierungswalzeneinheit basierend auf einem größten Druck von Drücken, bei denen die Laminierungswalzeneinheit das Elektrodenlaminat presst, korrigiert.

15. Verfahren nach Anspruch 11, wobei die Druckeinstelleinheit den Druck durch Anheben und Absenken einer oberen Laminierungswalze der Laminierungswalzeneinheit korrigiert.

## Revendications

1. Dispositif de stratification comprenant :
un rouleau de stratification configuré pour stratifier une feuille de séparation et une électrode d'un stratifié d'électrode en faisant pression sur un côté supérieur et un côté inférieur du stratifié d'électrode ;
un régulateur de pression connecté au rouleau de stratification, et configuré pour ajuster une pression du rouleau de stratification ;
un dispositif de coupe final disposé en aval du rouleau de stratification, et configuré pour couper la feuille de séparation et l'électrode du stratifié d'électrode afin de constituer une cellule unitaire ;
un module de visualisation disposé en aval du dispositif de coupe final, et configuré pour saisir une image de la cellule unitaire ;
**caractérisé en ce qu'**il comprend en outre
un module de commande pour calculer une valeur de luminosité de l'image, et configuré pour commander au régulateur de pression de rectifier la pression du rouleau de stratification en fonction de la valeur de luminosité.

2. Dispositif de stratification selon la revendication 1, le module de visualisation étant disposé dans une position adjacente à un côté inférieur de la cellule unitaire.

3. Dispositif de stratification selon la revendication 1, le module de commande étant configuré pour calculer la valeur de luminosité correspondant à une partie du séparateur au contact d'une partie marginale de l'électrode dans l'image.

4. Dispositif de stratification selon la revendication 3, une plage de luminosité admissible pour la valeur de luminosité étant préréglée dans le module de commande, et le module de commande étant configuré pour commander au régulateur de pression de rectifier la pression du rouleau de stratification lorsqu'il est établi que la valeur de luminosité se situe hors de la plage de luminosité admissible.

5. Dispositif de stratification selon la revendication 4, le module de visualisation étant configuré pour saisir l'image de la cellule unitaire en temps réel, et le module de commande étant configuré pour rectifier la pression du rouleau de stratification en temps réel.

6. Dispositif de stratification selon la revendication 1, le module de commande étant configuré pour rectifier la pression du rouleau de stratification en fonction de la pression la plus élevée parmi les pressions auxquelles le rouleau de stratification a été configuré pour faire pression sur le stratifié d'électrode.

7. Dispositif de stratification selon la revendication 1, le module de commande comprenant :
un module de gestion de la visualisation configuré pour recevoir l'image ; et
un module de commande automatique configuré pour calculer la valeur de luminosité en analysant l'image, et configuré pour commander au régulateur de pression de rectifier la pression du rouleau de stratification lorsqu'il est établi que la valeur de luminosité se situe hors d'une plage de luminosité admissible préréglée.

8. Dispositif de stratification selon la revendication 1, une valeur de pression initiale du régulateur de pression étant préréglée dans le module de commande.

9. Dispositif de stratification selon la revendication 1, le rouleau de stratification comprenant un rouleau de stratification supérieur et un rouleau de stratification inférieur, le rouleau de stratification inférieur étant disposé de façon adjacente à un côté inférieur de la feuille de séparation, et le régulateur de pression étant connecté au rouleau de stratification supérieur, le régulateur de pression étant configuré pour soulever et baisser le rouleau de stratification supérieur.

10. Dispositif de stratification selon la revendication 1, comprenant en outre un dispositif d'alarme configuré pour produire un signal sonore lorsqu'il est établi que la valeur de luminosité se situe hors d'une plage de luminosité admissible après la rectification de la pression du rouleau de stratification.

11. Procédé de fabrication d'une cellule unitaire, le procédé comprenant :
la stratification d'une feuille de séparation et d'une électrode d'un stratifié d'électrode en faisant pression sur le stratifié d'électrode à l'aide d'un rouleau de stratification ;
la découpe du stratifié d'électrode pour former la cellule unitaire, en utilisant un dispositif de coupe final ;
la saisie d'une image de la cellule unitaire à l'aide d'un module de visualisation ; et
le calcul d'une valeur de luminosité à l'aide d'un module de commande en analysant une image saisie par le module de visualisation, et en commandant à un régulateur de pression de rectifier une pression du rouleau de stratification d'après la valeur de luminosité.

12. Procédé selon la revendication 11, le module de commande calculant la valeur de luminosité correspondant à une partie du séparateur située au contact d'une partie marginale de l'électrode de la cellule unitaire dans l'image.

13. Procédé selon la revendication 12, une plage de luminosité admissible pour la valeur de luminosité étant préréglée dans le module de commande, et le module de commande commandant au régulateur de pression de rectifier la pression du rouleau de stratification lorsqu'il est établi que la valeur de luminosité se situe hors de la plage de luminosité admissible.

14. Procédé selon la revendication 11, le module de commande rectifiant la pression du rouleau de stratification en fonction de la pression la plus élevée parmi les pressions avec lesquelles le rouleau de stratification fait pression sur le stratifié d'électrode.

15. Procédé selon la revendication 11, le régulateur de pression rectifiant la pression en soulevant et en abaissant un rouleau de stratification supérieur du rouleau de stratification.
